# EUROPEAN PATENT APPLICATION

(11) **EP 4 693 045 A1**
(43) Date of publication of application: **11.02.2026**
(21) Application number: 25194272.8
(22) Date of filing: 06.08.2025
(51) Int. Cl.: G06F 9/50

(54) **DETECTING AND PROTECTING AGAINST ANTAGONISTIC WORKLOADS IN DISTRIBUTED IT AND CLUSTER MANAGEMENT SYSTEMS**

(30) Priority: 07.08.2024 US 202418797450
(71) Applicant: Google LLC, Mountain View, CA 94043 (US)
(72) Inventor: WOLAFKA, Rainer, 8002 Zürich (CH); ARSHAD, Mohammad Arslan, 8002 Zürich (CH); CECOLIN, Riccardo, Mountain View, California, 94043 (US); KIRCHNER, Davide, 8002 Zürich (CH); LE, Huy, 8002 Zürich (CH); RIBEIRO, Marcio, 8002 Zürich (CH)
(74) Representative: Betten & Resch

(57) **Abstract**

A method includes receiving a request to execute a particular workload of a plurality of workloads at a distributed computing system that includes a plurality of clusters. Each workload of the plurality of workloads includes respective workload characteristics. The method also includes determining a workload key for the particular workload based on the respective workload characteristics of the particular workload. The method also includes obtaining a workload history based on determining the workload key and, for each respective cluster of the plurality of clusters, determining a corresponding score associated with executing the particular workload at the respective cluster based on the workload history. The method also includes executing the particular workload at one of the plurality of clusters based on the corresponding score of each respective cluster of the plurality of clusters.

## Description

### TECHNICAL FIELD

This disclosure relates to detecting and protecting against antagonistic workloads in distributed IT and cluster management systems.

### BACKGROUND

Cloud computing providers operate cloud computing systems that have millions of computing resources distributed across the entire world. Managing the cloud computing system to operate in a reliable manner is a difficult task due to the distributed nature, scale, amount, and variance of workloads running on these computing resources. Cluster management and workload orchestration systems allow workloads to rapidly scale and execute globally wherever computing resources are available. As such, workloads can quickly be distributed to execute at multiple different locations of the cloud computing systems. This creates a risk of antagonistic workloads that negatively impact computing resources spreading to multiple different locations which can cause performance degradation or even outages for the cloud computing system.

### SUMMARY

One aspect of the disclosure provides a computer-implemented method that when executed on data processing hardware causes the data processing hardware to perform operations for protecting against antagonistic workloads in cluster management systems. The operations include receiving a request to execute a particular workload of a plurality of workloads at a distributed computing system including a plurality of clusters. Each workload of the plurality of workloads includes respective workload characteristics. The operations also include determining a workload key for the particular workload based on the respective workload characteristics of the particular workload. The operations also include obtaining a workload history including records of the at least one other workload associated with the workload key. For each respective cluster of the plurality of clusters, the operations include determining a corresponding score associated with executing the particular workload at the respective cluster based on the workload history. The operations also include executing the particular workload at one of the plurality of clusters based on the corresponding score of each respective cluster of the plurality of clusters.

Implementations of the disclosure may include one or more of the following optional features. In some implementations, the respective workload characteristics of the particular workload characterize interactions between the particular workload and the distributed computing system. The one or more workload characteristics may include at least one of a workload name, a username associated with the respective workload, or source code of the respective workload. In some examples, the distributed computing system further includes one or more geographical regions each including at least one of the plurality of clusters and each cluster of the plurality of clusters is configured to execute the plurality of workloads. Here, the one of the plurality of clusters executing the particular workload may be located in a same geographical region as a different one of the plurality of clusters executing the at least one other workload associated with the workload key. In these examples, the one of the plurality of clusters executing the particular workload may be located in a different geographical region as a different one of the plurality of clusters executing the at least one other workload associated with the workload key.

In some implementations, the operations further include obtaining a workload propagation policy defining a threshold amount of time required after generating the workload key before any workloads associated with the workload key are allowed to execute at any cluster of the plurality of clusters that none of the workloads associated with the workload key are currently executing at. In these implementations, determining the corresponding score associated with executing the particular workload at the respective cluster is further based on the workload propagation policy. In some examples, the operations further include determining a second workload key for a second particular workload by determining that none of the respective workload characteristics of the plurality of workloads satisfy the similarity threshold with the respective workload characteristics of the second particular workload and generating a new workload key for the second particular workload based on determining that none of the respective workload characteristics satisfy the similarity threshold with the respective workload characteristics of the second particular workload. In other examples, determining the workload key for the particular workload includes determining that the respective workload characteristics of the at least one other workload associated with the workload key satisfies the similarity threshold with the respective workload characteristics of the particular workload. In some implementations, the workload key is associated with at least one other workload of the plurality of workloads and the respective workload characteristics of each workload of the at least one other workload satisfies a similarity threshold with the respective workload characteristics of the particular workload.

Another aspect of the disclosure provides a system that includes data processing hardware and memory hardware storing instructions that when executed on the data processing hardware causes the data processing hardware to perform operations. The operations include receiving a request to execute a particular workload of a plurality of workloads at a distributed computing system including a plurality of clusters. Each workload of the plurality of workloads includes respective workload characteristics. The operations also include determining a workload key for the particular workload based on the respective workload characteristics of the particular workload. The operations also include obtaining a workload history including records of the at least one other workload associated with the workload key. For each respective cluster of the plurality of clusters, the operations include determining a corresponding score associated with executing the particular workload at the respective cluster based on the workload history. The operations also include executing the particular workload at one of the plurality of clusters based on the corresponding score of each respective cluster of the plurality of clusters.

Implementations of the disclosure may include one or more of the following optional features. In some implementations, the respective workload characteristics of the particular workload characterize interactions between the particular workload and the distributed computing system. The one or more workload characteristics may include at least one of a workload name, a username associated with the respective workload, or source code of the respective workload. In some examples, the distributed computing system further includes one or more geographical regions each including at least one of the plurality of clusters and each cluster of the plurality of clusters is configured to execute the plurality of workloads. Here, the one of the plurality of clusters executing the particular workload may be located in a same geographical region as a different one of the plurality of clusters executing the at least one other workload associated with the workload key. In these examples, the one of the plurality of clusters executing the particular workload may be located in a different geographical region as a different one of the plurality of clusters executing the at least one other workload associated with the workload key.

In some implementations, the operations further include obtaining a workload propagation policy defining a threshold amount of time required after generating the workload key before any workloads associated with the workload key are allowed to execute at any cluster of the plurality of clusters that none of the workloads associated with the workload key are currently executing at. In these implementations, determining the corresponding score associated with executing the particular workload at the respective cluster is further based on the workload propagation policy. In some examples, the operations further include determining a second workload key for a second particular workload by determining that none of the respective workload characteristics of the plurality of workloads satisfy the similarity threshold with the respective workload characteristics of the second particular workload and generating a new workload key for the second particular workload based on determining that none of the respective workload characteristics satisfy the similarity threshold with the respective workload characteristics of the second particular workload. In other examples, determining the workload key for the particular workload includes determining that the respective workload characteristics of the at least one other workload associated with the workload key satisfies the similarity threshold with the respective workload characteristics of the particular workload. In some implementations, the workload key is associated with at least one other workload of the plurality of workloads and the respective workload characteristics of each workload of the at least one other workload satisfies a similarity threshold with the respective workload characteristics of the particular workload.

The details of one or more implementations of the disclosure are set forth in the accompanying drawings and the description below. Other aspects, features, and advantages will be apparent from the description and drawings, and from the claims.

### DESCRIPTION OF DRAWINGS

FIG. 1 is a schematic view of an example system executing a cluster management system and a workload advisor module.
FIGS. 2A-2C are schematic views of example antagonistic workload risk classes.
FIG. 3 is a flowchart of an example arrangement of operations for a computer-implemented method of protecting against antagonistic workloads in cluster management systems.
FIG. 4 is a schematic view of an example computing device that may be used to implement the systems and methods described herein.

Like reference symbols in the various drawings indicate like elements.

### DETAILED DESCRIPTION

Cloud computing providers operate cloud computing systems that have millions of computing resources distributed across the entire world. These cloud computing systems use a single control plane that provides efficient scheduling of workloads, high performance workload throughput, fault tolerance, and workload isolation to provide certain features for users. One overarching attribute of these cloud computing systems is high reliability and service availability for users to run applications and workloads. Managing the cloud computing system to operate in a reliable manner is a difficult task due to the distributed nature, scale, amount, and variance of workloads running on these computing resources.

Cluster management and workload orchestration systems allow workloads to rapidly scale and execute globally wherever computing resources are available. For efficiency reasons, cloud computing providers share computing resources among services that expect high reliability and workloads that are dynamically created and deployed anywhere computing resources are available. As such, workloads can quickly distribute to execute at multiple different locations of the cloud computing systems. This creates a risk of antagonistic workloads that negatively impact computing resources by rapidly spreading to multiple different locations which can cause performance degradation or even outages for the cloud computing system. In particular, these antagonistic workloads can negatively impact shared infrastructure components due to bugs, scaling issues, or intentional malicious behavior of the antagonistic workloads. Antagonistic workloads are homologous workloads that schedule quickly across several clusters or regions that may cause correlated failures across multiple independent locations in a short amount of time. Accordingly, uncontrolled propagation of antagonistic workloads across the cloud computing system can cause performance degradation or even outages for other workloads including workloads requiring high availability of the computing resources.

To that end, implementations herein are directed towards a method and system of detecting and preventing antagonistic workloads from propagating across a distributed computing system. In particular, the method includes receiving a request to execute a particular workload of a plurality of workloads at a distributed computing system including a plurality of clusters. Each workload of the plurality of workloads includes respective workload characteristics that characterize interactions between the respective workload and the distributed computing system. The method also includes determining a workload key for the particular workload based on the respective workload characteristics of the particular workload. The respective workload characteristics satisfying a similarity threshold with the respective workload characteristics of the particular workload. The at least one other workload associated with the workload key. That is, the workload key may define an association among workloads that have similar or the same workload characteristics. The method also includes obtaining a workload history including records of the at least one other workload associated with the workload key. For each respective cluster of the plurality of clusters, the method includes determining a corresponding score associated with executing the particular workload at the respective cluster based on the workload history. The method also includes executing the particular workload at one of the plurality of clusters based on the corresponding score of each respective cluster of the plurality of clusters.

As will become apparent, workload keys associated with workloads that have been executing at the distributed computing system for a predetermined amount of time and have not demonstrated characteristics of antagonistic workloads may not have any restrictions on which clusters the associated workloads at. Here, since workloads associated with the workload key have been executing at the distributed computing system without negatively impacting the computing resources, it can be inferred that other workloads associated with the same workload key will similarly not negatively impact the computing resources. Thus, these workloads are not restricted from propagating across the distributed computing system since there is an association with other workloads that are not antagonistic. On the other hand, workload keys associated with workloads that have been executing at the distributed computing system and have shown characteristics of antagonistic workloads may be restricted to executing at one cluster or one region of clusters. Notably, antagonistic workloads are not restricted from executing at the distributed computing system entirely, rather these workloads are isolated to certain clusters or regions of clusters. As such, even if the antagonistic workloads negatively impact the computing resources at a certain region of clusters, other workloads may migrate to execute at another region of clusters such that the other workloads are not affected by the antagonistic workloads. Without mitigating the antagonistic workloads (e.g., by allowing them to migrate to other clusters), the other workloads may not be able to migrate to execute at another region because several regions of clusters may be negatively impacted by the antagonistic workloads.

In other scenarios, workloads associated with newly generated workload keys may not have been executing at the distributed computing system long enough to determine whether these workloads demonstrate characteristics of antagonistic workloads or not. Thus, these workloads may be restricted to executing at one cluster or region of clusters for a predetermined period of time to observe these workloads. After the predetermined period of time, if the workloads have not shown antagonistic workload characteristics, the workloads associated with the newly generated workload key may be allowed to execute at other clusters or other regions of clusters.

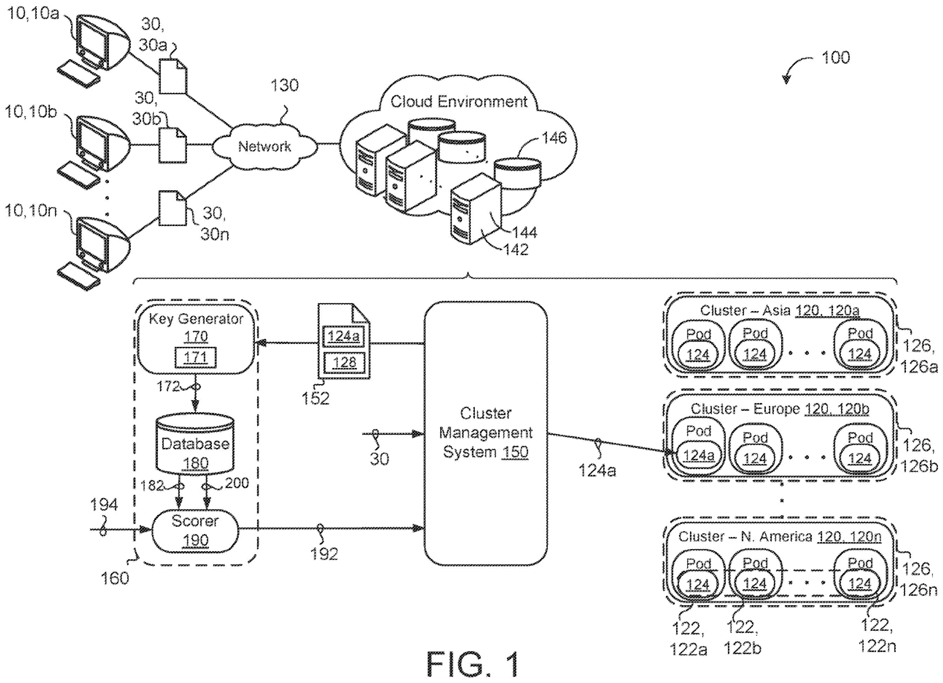

Referring now to FIG. 1, in some implementations, an example system 100 includes a distributed computing system 140. The distributed computing system 140 may be a single computer, multiple computers, or a cloud computing environment having scalable elastic computing resources 142. The resources 142 may include computing resources (e.g., data processing hardware) 144 and/or storage resources (e.g., memory hardware) 146. The distributed computing system 140 communicates with a plurality of clusters (i.e., cells or production cells) 120, 120a-n each including a respective portion of the computing resources 144 and a respective portion of the storage resources 146 of the distributed computing system 140. That is, the computing resources 144 and the storage resources 146 of the distributed computing system 140 are distributed among the plurality of clusters 120. Moreover, each cluster 120 is configured to execute one or more workloads 124 using the computing resources 144 and the storage resources 146. In some examples, each cluster 120 may include one or more pods 122 or any other type of container for executing the workloads 124 within the cluster 120. Some pods 122 may execute the same workload 124 while other pods 122, within the same cluster 120 or a different cluster 120, may execute different workloads 124.

Each workload 124 is an application or service that is deployed for execution at the distributed computing system 140. In some instances, multiple workloads 124 execute together at the same cluster 120 or different clusters to run the application or service. For example, one or more workloads 124 corresponding to a shopping application may execute at a single pod 122 or multiple pods 122 from the same cluster 120 or different clusters 120. Workloads 124 may include a plurality of jobs each including an abstract object that specifies an application (e.g., binary) and metadata associated with the application for execution by the distributed computing system 140.

Each respective cluster 120 is also associated with a respective geographical region 126 of one or more geographical regions 126, 126a-n. For example, a first cluster 120a may be associated with a first geographical region 126a of Asia, a second cluster 120b may be associated with a second geographical region 126b of Europe, and an nth cluster 120n may be associated with an nth geographical region 126n of North America. That is, each cluster 120 may be associated with the respective geographical region 126 where the computing resources 144 and/or storage resources 146 of the distributed computing system 140 are physically located. Each cluster 120 may be located in a different geographical region 126. Although, in some examples, multiple clusters 120 share a same geographical region 126. Thus, the distributed computing system 140 may be in communication with the plurality of clusters 120 via a network 130. The distributed computing system 140 includes failure domains which are physical or logical domains that fail independently of other domains with the same scope. Defining and aligning failure domains may control how far failures may propagate across the distributed computing system 140.

The distributed computing system 140 is also in communication with one or more user devices 10, 10a-n via the network 130. Each user device 10 may correspond to any suitable computing device such as a desktop workstation, laptop workstation, mobile device (e.g., smart phone or tablet), wearable device, smart appliance, smart display, or smart speaker. Each user device 10 may also be associated with a user. The user devices 10 transmit application level requests 30, 30a-n to the distributed computing system 140 via the network 130. For example, application level requests 30 may request the distributed computing system 140 to create and execute applications or services. Notably, after the user device 10 submits the application level request 30, the distributed computing system 140 may automatically manage execution of the application or service, such as scaling the number of workloads 124 that execute the application or service or relocating workloads 124 to another cluster or geographical region 126, without any further input from the user device 10.

In some implementations, the distributed computing system 140 executes a cluster management system (i.e., workload orchestrator) 150 and a workload advisor module 160. The cluster management system 150 is configured to receive the application level requests 30 from the user devices 10 and schedule the application for execution at the distributed computing system 140. Moreover, the cluster management system 150 manages the application during execution at the distributed computing system 140. For instance, the cluster management system 150 may generate requests (i.e., workload requests) 152 to execute one or more workloads 124 corresponding to an application specified by the application level request 30. That is, the cluster management system 150 may request multiple workloads 124 to execute the specified application or a single workload 124 to execute the specified application. Subsequently, the cluster management system 150 may scale up or scale down the number of workloads 124 executing at the distributed computing system 140 for the application. Notably, the cluster management system 150 schedules each workload 124 to execute at particular clusters 120 or geographical regions 126 of clusters 120. In some scenarios, this includes initially scheduling a respective workload 124 to execute at one cluster 120 or geographical region 126 and subsequently migrating the respective workload 124 to execute at another cluster 120 or geographical region 126.

Each respective workload 124 of the plurality of workloads 124 includes workload characteristics 128 that characterizes interactions between the respective workload 124 and the distributed computing system 140. That is, the workload characteristics 128 indicate how the respective workload 124 will likely interact with the distributed computing system 140 during execution. As will become apparent, the workload advisor module 160 may use the workload characteristics 128 for a particular workload 124, 124a to identify other workloads 124 that likely interact with the distributed computing system 140 in a similar manner. As such, the workload advisor module 160 may infer whether the particular workload 124a will be an antagonistic workload or non-antagonistic workload during execution based on how the identified other workloads 124 have executed at the distributed computing system 140 previously.

In some examples, the cluster management system 150 determines the respective workload characteristics 128 for each respective workload 124 based on the application level requests 30. The respective workload characteristics 128 of each workload 124 may include at least one of a workload name, a username associated with the workload, or a binary package version of the workload 124. Optionally, the respective workload characteristics 128 may include other workloads 124 associated with the same application level request or the same user. The workload name may be uniquely assigned to the workload 124 by the cluster management system 150 or a user that requested the application and the username may identify the user that requested the application. Moreover, the binary package version includes compiled source code for executing the respective workload 124. Alternatively, in lieu of the binary package version a source package may be used which includes source code that needs to be compiled and built before executing the respective workload 124. In short, the binary package version and the source package each represent different forms of source code for executing the respective workload 124 at the distributed computing system 140.

The workload advisor module 160 may include a key generator 170, a workload database 180, and/or a scorer 190. The workload advisor module 160 is configured to recommend to the cluster management system 150 one or more clusters 120 of the plurality of clusters 120 that each workload 124 should execute at in order to mitigate any potential negative impacts of antagonistic workloads 124. The key generator 170 receives the requests 152 from the cluster management system 150 which may include a particular workload 124a and respective workload characteristics 128 of the particular workload 124a. Moreover, the key generator 170 determines a workload key 172 for the particular workload 124a based on the respective workload characteristics 128 of the particular workload 124a.

The workload key 172 defines an association between the particular workload 124a of the request 152 and other workloads 124 of the plurality of workloads 124 that have respective workload characteristics 128 that satisfy a similarity threshold 171. Simply put, the key generator 170 associates workloads 124 with sufficiently similar workload characteristics 128 (e.g., that satisfy the similarity threshold 171) together. In some examples, the respective workload characteristics 128 of at least one other workload 124 of the plurality of workloads 124 satisfies the similarity threshold 171 with the respective workload characteristics 128 of the particular workload 124a. In this example, the at least one other workload 124 is associated with the workload key 172 because the key generator 170 previously determined the workload key 172 for the at least one other workload 124. After determining the workload key 172 for the particular workload 124a, the particular workload 124a is associated with the workload key 172. For instance, each workload 124 associated with a shopping application may be associated with the same workload key 172. Thus, when a new workload 124 associated with the shopping application is requested, the workload advisor module 160 associates the new workload 124 with other workloads 124 associated with the shopping application that have already executed, or are currently executing, at the distributed computing system 140. In some examples, the workload key 172 associates the particular workload 124a with multiple other workloads 124 when the particular workload 124a shares similar workload characteristics 128 with multiple other workloads 124. In other examples, the workload key 172 does not associate the particular workload 124a with any other workloads 124 when the particular workload 124a does not share similar workload characteristics 128 with any other workloads 124. In these other examples, the respective workload characteristics 128 of none of the plurality of workloads 124 satisfy the similarity threshold 171 with the respective workload characteristics 128 of the particular workload 124a.

In some examples, the key generator 170 determines the workload key 172 based on the workload name and the username associated with the particular workload 124a. Here, the key generator 170 assumes that workloads 124 scheduled for the same user with the same workload name execute the same code, and thus, present similar risks to the distributed computing system 140. In these examples, however, workloads 124 that are executing the same or similar code but operate on different data may have different workload names. This may cause the key generator 170 to determine different workload keys 172 for these workloads 124 despite the fact that these workloads 124 execute the same or similar code, and thus, present similar risks to the distributed computing system 140. As such, in other examples, the key generator 170 determines the workload key 172 based on the binary package version or source package of the workload 124 in addition to, or in lieu of, the workload name and the username associated with the workload 124. The binary package of the workload 124 represents the source code, or a hash thereof, for executing the workload 124. Thus, the key generator 170 may generate the same workload key 172 for workloads 124 with different workload names or usernames associated with the workload but similar code when determining the workload key 172 based on the binary package version or source package.

In some implementations, determining the workload key 172 for the particular workload 124a includes generating a new workload key 172 for the particular workload 124a when the respective workload characteristics 128 of the particular workload 124a are not similar (e.g.., do not satisfy the similarity threshold 171) with any other workloads 124. That is, the key generator 170 generates the new workload key 172 based on determining that none of the plurality of workloads 124 include respective workload characteristics 128 that satisfy the similarity threshold 171 with the respective workload characteristics 128 of the particular workload 124a. Thereafter, the key generator 170 associates any subsequent workloads 124 with sufficiently similar workload characteristics 128 to the particular workload 124a with the new workload key 172 instead of generating another new workload key 172.

In other implementations, determining the workload key 172 for the particular workload 124a includes identifying or determining at least one other workload 124 of the plurality of workloads 124 that includes respective workload characteristics 128 that satisfy the similarity threshold 171 when compared to the respective workload characteristics 128 of the particular workload 124a. Put another way, determining the workload key 172 for the particular workload 124a includes determining that the respective workload characteristics 128 of the at least one other workload 124 associated with the workload key 172 satisfies the similarity threshold 171 with the respective workload characteristics 128 of the particular workload 124a. Here, the at least one other workload 124 that is sufficiently similar to the particular workload 124a is associated with another workload key 172 previously generated by the key generator 170. Thus, the key generator 170 associates the particular workload 124a with the other workload key 172 previously generated by the key generator 170 such that the particular workload 124a is also associated with the at least one other workload 124. As such, the key generator 170 may store each workload key 172 generated for the plurality of workloads 124. Thereafter, the key generator 170 transmits the workload key 172 for the particular workload 124a to the workload database 180.

The workload database 180 stores workload history 182 associated with each workload 124 of the plurality of workloads 124. The workload history 182 includes records of jobs and workloads 124 that previously executed, or is currently executing, the distributed computing system 140. The records may include metadata associated with the workloads 124 such as: workload name; username associated with the workload 124; admission, scheduling, execution, or termination time; termination state; binary package version; package identification (ID); geographical region 126; cluster 120; pod 122; computing resource consumption; etc. In the example shown, the workload database 180 resides in the workload advisor module 160, however, the workload database 180 may also reside in the cluster management system 150 in addition to, or in lieu of, the workload advisor module 160. In some configurations, the workload database 180 uniquely associates the workload history 182 with corresponding workload keys 172. Put another way, the workload database 180 may provide workload history 182 specifically corresponding to workloads 124 associated with a respective workload key 172. In short, the workload history 182 indicates to the workload advisor module 160 whether certain workloads 124 have demonstrated antagonistic workload characteristics while executing at the distributed computing system 140.

To that end, the workload advisor module 160 obtains the workload history 182 of each workload 124 associated with the workload key 172 and transmits the workload history 182 to the scorer 190. For instance, the workload advisor module 160 may obtain the workload history 182 by querying the workload database 180. For each respective cluster 120 of the plurality of clusters 120, the scorer 190 determines a corresponding score 192 associated with executing the particular workload 124a at the respective cluster 120 based on the workload history 182. Here, each corresponding score 192 indicates whether the particular workload 124a should execute at the respective cluster 120 based on the workload history 182. For example, each corresponding score 192 may include a value between zero (0) and one (1) whereby the greater the value is the stronger the scorer 190 recommends the particular workload 124a executes at the respective cluster 120, and vice versa.

In some implementations, the scorer 190 classifies the workload key 172 determined for the particular workload 124a based on the obtained workload history 182. Classification may include a seen-safe classification, an unseen classification, or a seen-unsafe classification. The seen-safe classification represents workload keys 172 associated with workloads 124 that have executed at the distributed computing system for a predetermined amount of time and satisfy an antagonist threshold based on the workload history 182. Simply put, this classification represents workloads 124 that have been executing long enough without any negative impacts such that the workload advisor module 160 should not restrict any other workloads 124 associated with the same workload key 172 in regards to which clusters 120 or geographical regions 126 they can execute at.

The unseen classification represents workload keys 172 associated with workloads 124 that have not executed at the distributed computing system 140 for the predetermined amount of time based on the workload history 182. That is, there is an insufficient amount of workload history 182 associated with these workloads 124 to determine whether the workloads 124 will negatively impact the distributed computing system 140 or not. To that end, the workload advisor module 160 may recommend multiple clusters 120 or geographical regions 126 to execute these workloads 124 but restrict each workload 124 associated with the workload key 172 within the same cluster 120 or geographical region 126. For instance, the workload advisor module 160 may recommend an initial workload 124 associated with a respective workload key 172 with the unseen classification to execute at one of three clusters 120. Thereafter, the workload advisor module 160 recommends each subsequent workload 124 associated with the respective workload key 172 to execute at the particular one of the three clusters 120 that is executing the initial workload 124.

The seen-unsafe classification represents workload keys 172 associated with workloads 124 that have executed at the distributed computing system for the predetermined amount of time and fail to satisfy the antagonist threshold based on the workload history 182. Simply put, this classification represents workloads 124 that have been executing long enough to determine that the workloads 124 and other similar workloads 124 may negatively impact the distributed computing system 140. To that end, the workload advisor module 160 may restrict workloads 124 associated with the seen-unsafe classification to a single cluster 120 or geographical region 126 such that any negative impacts are limited to the single cluster 120 or geographical region 126. The scorer 190 may continuously monitor the workload history 182 so as to reclassify the workload keys 172 based on updated workload history 182. For example, a respective workload key 172 classified as unseen may be reclassified as seen-safe or seen-unsafe after executing for the predetermined amount of time. In another example, a respective workload key 172 classified as seen-safe may be reclassified as seen-unsafe based on recent execution behavior that indicates negative impacts at the distributed computing system 140.

In some implementations, the workload advisor module 160 obtains a workload propagation policy 194 that defines a threshold amount of time required after generating the workload key 172 before any workloads 124 associated with the workload key 172 are allowed to execute at another cluster 120 of the plurality of clusters 120 that none of the workloads 124 associated with the workload key 172 are currently executing at. That is, the workload propagation policy 194 may require, for example, one hour of time after generating the workload key 172 before any workloads 124 associated with the workload key 172 may begin executing at another cluster 120. The workload propagation policy 194 may also restrict propagation of workloads 124 across zones, failure domains, or geographical regions 126 in addition to, or in lieu of, the clusters 120. Advantageously, by slowing down the propagation of workloads 124 across clusters 120, both administrators of the distributed computing system 140 and automated systems have sufficient time to react and stop further propagation of any antagonistic workloads 124. For instance, the cluster management system 150 may quarantine workload keys 172, quarantine the username associated with workload keys 172, or freeze the entire scheduling system responsive to detecting workloads 124 or workload keys 172 showing antagonistic characteristics.

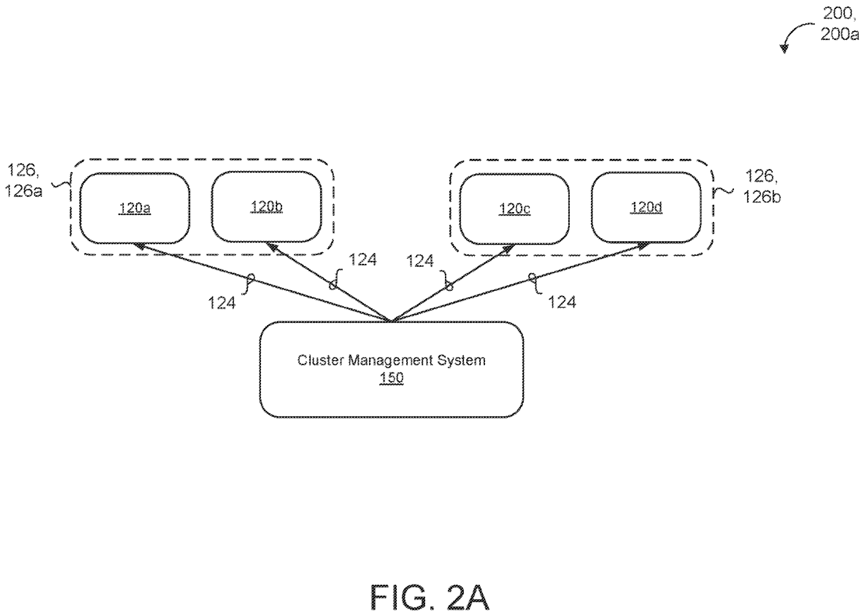

For example, workloads 124 associated with a respective workload key 172 may be restricted to executing at a first cluster 120 or geographical region 126 for the first hour of existence of the workload key 172. Thereafter, the workloads 124 associated with the respective workload key 172 may be restricted to executing at one of the first cluster 120 or geographical region 126 or a second cluster 120 or geographical region 126 for the second hour of existence of the workload key 172. The workload propagation policy 194 may define any predetermined amount of time and any rate of propagation (e.g., five clusters for the first hour, 10 clusters for the second hour, and so on). Accordingly, the scorer 190 may determine the corresponding score 192 associated with executing the particular workload 124a at the respective cluster further based on the workload propagation policy 194. In some implementations, the workload database 180 also provides antagonistic workload risk classes 200 associated with the workload key 172. That is, the workload advisor module 160 may determine the antagonistic workload risk class 200 for the workload key 172 based on the workload history 182. As discussed in greater detail with reference to FIGS. 2A-2C, each antagonistic workload risk class 200 represents particular risks to the distributed computing system 140 associated with the workload key 172. To that end, the scorer 190 may determine the corresponding score further based on the antagonistic workload risk class 200. For example, the scorer 190 may adjust a weight of the score 192 and/or parameters defined by the workload propagation policy 194 based on the workload risk class 200.

The scorer 190 transmits the corresponding score 192 determined for each respective cluster 120 of the plurality of clusters 120 to the cluster management system 150. The cluster management system 150 is configured to select a respective one of the plurality of clusters 120 based on the corresponding score 192 of each respective cluster 120 of the plurality of clusters 120. For example, the cluster management system 150 may select the respective one of the plurality of clusters 120 having the greatest corresponding score 192. In some instances, however, the respective one of the plurality of clusters 120 having the greatest corresponding score 192 is unavailable due to capacity constraints such that the cluster management system 150 may select the respective one of the plurality of clusters 120 having the second or third greatest corresponding score 192. In some implementations, the application level request 30 may specify one or more preferences for scheduling workloads 124 such as distribution of workloads 124 across one or more geographical regions 126, one or more preferred geographical regions 126, or one or more preferred clusters 120. As such, the cluster management system 150 may determine the corresponding score 192 for each respective cluster 120 further based on these preferences. In the example shown, the cluster management system 150 selects the second cluster 120b in the second geographical region 126 of Europe to execute the particular workload 124a by way of example only. That is, the cluster management system 150 may select any one (or one or more) of the clusters 120 or geographical regions 126 to execute the particular workload 124a. The one of the plurality of clusters 120 executing the particular workload 124a may be located in a same geographical region 126 or located in a different geographical region 126 as a different one of the plurality of clusters 120 executing the at least one other workload 124 associated with the workload key 172.

FIGS. 2A-2C show example antagonistic workload risk classes (e.g., risk classes) 200. The risk classes 200 illustrate potential negative impacts on shared infrastructure when antagonistic workloads 124 are left unmitigated. Each risk class 200 includes the cluster management system 150 scheduling a respective workload 124 to execute at the first geographic region 126a which includes the first and second cluster 120a, 120b and/or the second geographic region 126b which includes the third and fourth cluster 120c, 120d. In particular, FIG. 2A shows a first risk class 200, 200a where the cluster management system 150 schedules the same antagonistic workload 124 on multiple clusters 120 and multiple geographical regions 126 at the same time or within a short amount of time. Consequently, the antagonistic workload 124 may negatively impact shared infrastructure of the cluster 120 or geographical region 126 and cause a widespread outage. Typically, antagonistic workloads 124 use infrastructure in a specific set of clusters 120 regardless of which cluster 120 is executing the workload 124. This is most problematic for highly replicated workloads as highly replicated workloads end up overwhelming their dependencies.

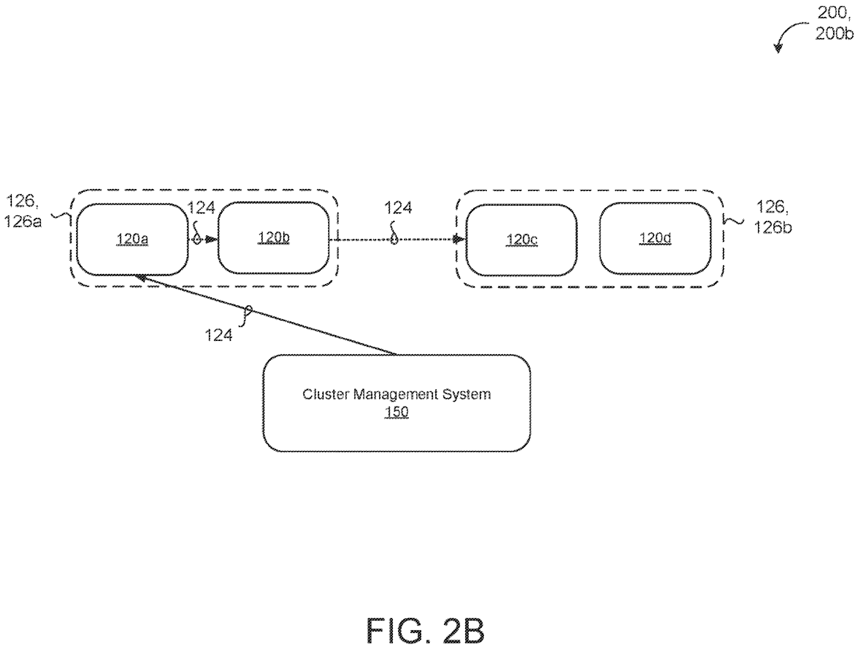

FIG. 2B shows a second risk class 200, 200b where the cluster management system 150 schedules the antagonistic workload 124 at a single cluster 120 (e.g., the first cluster 120a) which causes the local infrastructure of the first cluster 120a to crash and become unavailable. The cluster management system 150 may not understand this failure at the first cluster 120a and, in this scenario, migrates the antagonistic workload 124 (shown by the dotted arrow) to another cluster 120 (e.g., the second cluster 120b) which propagates the negative impact of the antagonistic workload 124. Moreover, the local infrastructure of the second cluster 120b may crash and become available such that the cluster management system 150 migrates the antagonistic workload 124 (shown by the dotted arrow) to yet another cluster 120 (e.g., the third cluster 120c) thereby even further propagating the negative impact of the antagonistic workload 124. As such, the cluster management system 150 may continue propagating the antagonistic workload 124 to multiple other geographical regions 126 or clusters 120 until it determines the workload 124 is antagonistic. However, once the determination is made the workload 124 may have already created outages at multiple clusters 120 and multiple geographical regions 126.

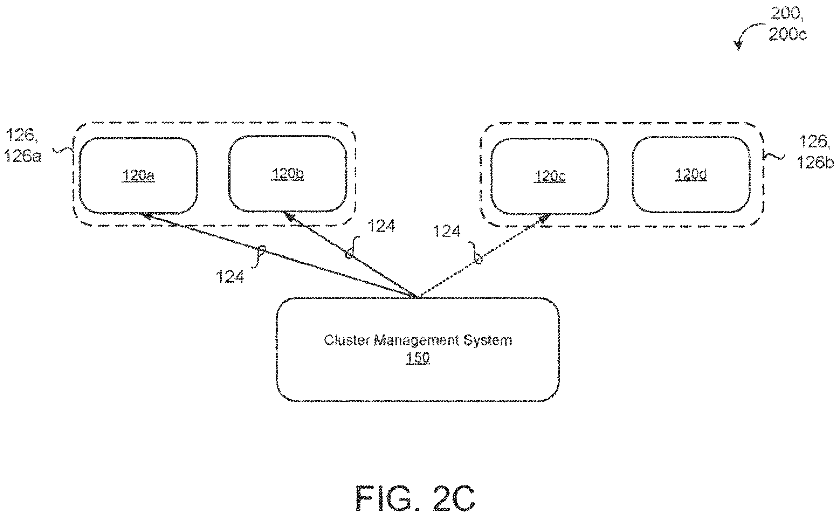

FIG. 2C shows a third risk class 200, 200c where the cluster management system 150 initially schedules the antagonistic workload 124 at the first cluster 120a and the second cluster 120b where the workload 124 executes without causing any issues. Here, the cluster management system 150 may schedule the workloads 124 based on available capacity and migrate (shown by the dotted arrow) the workloads 124 executing at the first cluster 120a and the second cluster 120b without any issue to now execute at the third cluster 120c. However, migrating the workloads 124 to the third cluster 120c may overwhelm the third cluster 120c causing negative impacts to the shared infrastructure.

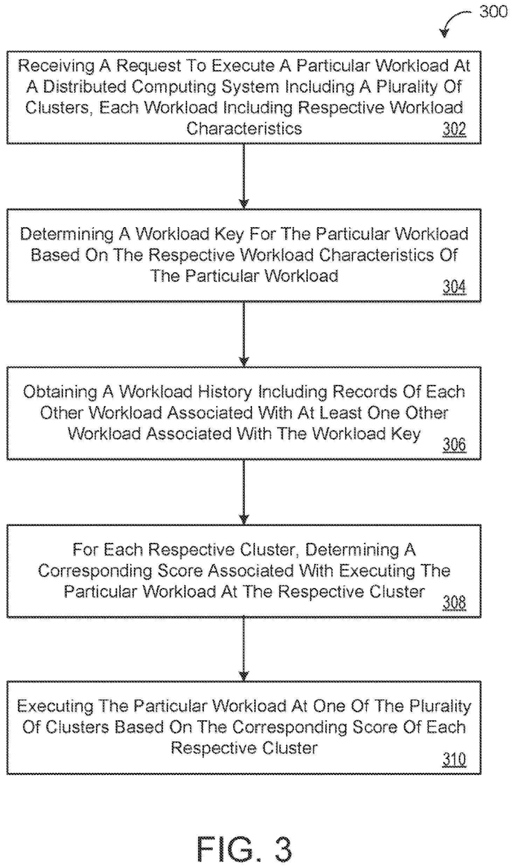

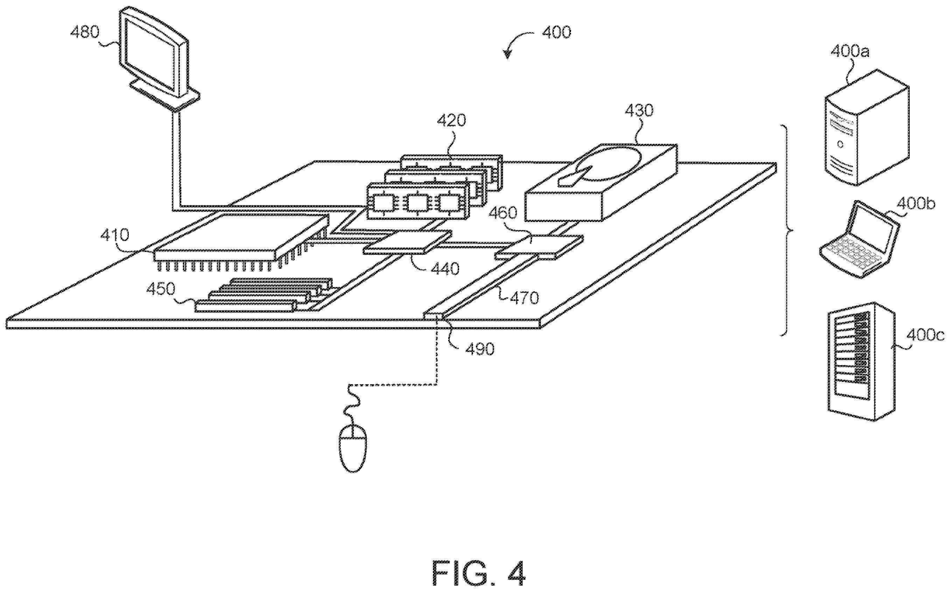

FIG. 3 is a flowchart of an example arrangement of operations for a computerimplementation method 300 of protecting against antagonistic workloads in cluster management systems. The method 300 may execute on data processing hardware 410 (FIG. 4) using instructions stored on memory hardware 410 (FIG. 4) that may reside on the distributed computing system 140 of FIG. 1 corresponding to a computing device 400 (FIG. 4).

At operation 302, the method 300 includes receiving a request 152 to execute a particular workload 124a of a plurality of workloads 124 at a distributed computing system 140 including a plurality of clusters 120. Each workload 124 of the plurality of workloads 124 includes respective workload characteristics 128. At operation 304, the method 300 includes determining a workload key 172 for the particular workload 124a based on the respective workload characteristics 128 of the particular workload 124a. The respective workload characteristics 128 of at least one other workload 124 of the plurality of workloads 124 satisfying a similarity threshold 171 with the respective workload characteristics of the particular workload 124a. The at least one other workload 124 is associated with the workload key 172 before determining the workload key 172 for the particular workload 124a. Moreover, after determining the workload key 172 for the particular workload 124a both the particular workload 124a and the at least one other workload 124 of the plurality of workloads 124 are associated with the workload key. At operation 306, the method 300 includes obtaining a workload history 182 including records of the at least one other workload 124 associated with the workload key 172. At operation 308, the method 300 includes, for each respective cluster 120 of the plurality of clusters 120, determining corresponding score 192 associated with executing the particular workload 124a at the respective cluster 120 based on the workload history 182. At operation 310, the method 300 includes executing the particular workload 124a at one of the plurality of clusters 120 based on the corresponding score 192 of each respective cluster 120 of the plurality of clusters 120.

FIG. 4 is a schematic view of an example computing device 400 that may be used to implement the systems and methods described in this document. The computing device 400 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 400 includes a processor 410 (also referred to as computer processor), memory 420, a storage device 430, a high-speed interface/controller 440 connecting to the memory 420 and high-speed expansion ports 450, and a low speed interface/controller 460 connecting to a low speed bus 470 and a storage device 430. Each of the components 410, 420, 430, 440, 450, and 460, are interconnected using various busses, and may be mounted on a common motherboard or in other manners as appropriate. The processor 410 can process instructions for execution within the computing device 400, including instructions stored in the memory 420 or on the storage device 430 to display graphical information for a graphical user interface (GUI) on an external input/output device, such as display 480 coupled to high speed interface 440. In other implementations, multiple processors and/or multiple buses may be used, as appropriate, along with multiple memories and types of memory. Also, multiple computing devices 400 may be connected, with each device providing portions of the necessary operations (e.g., as a server bank, a group of blade servers, or a multi-processor system).

The memory 420 stores information non-transitorily within the computing device 400. The memory 420 may be a computer-readable medium (also referred to as computer program product), a volatile memory unit(s), or non-volatile memory unit(s). The non-transitory memory 420 may be physical devices used to store programs (e.g., sequences of instructions) or data (e.g., program state information) on a temporary or permanent basis for use by the computing device 400. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 430 is capable of providing mass storage for the computing device 400. In some implementations, the storage device 430 is a computer-readable medium. In various different implementations, the storage device 430 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 420, the storage device 430, or memory on processor 410.

The high speed controller 440 manages bandwidth-intensive operations for the computing device 400, while the low speed controller 460 manages lower bandwidth-intensive operations. Such allocation of duties is exemplary only. In some implementations, the high-speed controller 440 is coupled to the memory 420, the display 480 (e.g., through a graphics processor or accelerator), and to the high-speed expansion ports 450, which may accept various expansion cards (not shown). In some implementations, the low-speed controller 460 is coupled to the storage device 430 and a low-speed expansion port 490. The low-speed expansion port 490, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 400 may be implemented in a number of different forms, as shown in the figure. For example, it may be implemented as a standard server 400a or multiple times in a group of such servers 400a, as a laptop computer 400b, or as part of a rack server system 400c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A number of implementations have been described. Nevertheless, it will be understood that various modifications may be made without departing from the scope of the disclosure. Accordingly, other implementations are within the scope of the following claims.

## Claims

1. A computer-implemented method that when executed on data processing hardware causes the data processing hardware to perform operations comprising:
receiving a request to execute a particular workload of a plurality of workloads at a distributed computing system comprising a plurality of clusters, each workload of the plurality of workloads comprising respective workload characteristics;
determining a workload key for the particular workload based on the respective workload characteristics of the particular workload;
based on determining the workload key, obtaining a workload history comprising records of the at least one other workload associated with the workload key;
for each respective cluster of the plurality of clusters, determining a corresponding score associated with executing the particular workload at the respective cluster based on the workload history; and
executing the particular workload at one of the plurality of clusters based on the corresponding score of each respective cluster of the plurality of clusters.

2. The computer-implemented method of claim 1,
wherein the respective workload characteristics of the particular workload characterize interactions between the particular workload and the distributed computing system;
wherein the respective workload characteristics comprise at least one of:
a workload name;
a username associated with the respective workload; or
source code of the respective workload.

3. The computer-implemented method of claim 1 or 2, wherein:
the distributed computing system further comprises one or more geographical regions each comprising at least one of the plurality of clusters; and
each cluster of the plurality of clusters is configured to execute the plurality of workloads.

4. The computer-implemented method of claim 3,
wherein the one of the plurality of clusters executing the particular workload is located in a same geographical region as a different one of the plurality of clusters executing the at least one other workload associated with the workload key; or
wherein the one of the plurality of clusters executing the particular workload is located in a different geographical region as a different one of the plurality of clusters executing the at least one other workload associated with the workload key.

5. The computer-implemented method of one of claims 1 to 4, wherein the operations further comprise obtaining a workload propagation policy defining a threshold amount of time required after generating the workload key before any workloads associated with the workload key are allowed to execute at any cluster of the plurality of clusters that none of the workloads associated with the workload key are currently executing at; and
wherein determining the corresponding score associated with executing the particular workload at the respective cluster is, optionally, further based on the workload propagation policy.

6. The computer-implemented method of one of claims 1 to 5, wherein the operations further comprise determining a second workload key for a second particular workload by:
determining that none of the respective workload characteristics of the plurality of workloads satisfy a similarity threshold with the respective workload characteristics of the second particular workload; and
based on determining that none of the respective workload characteristics satisfy the similarity threshold with the respective workload characteristics of the second particular workload, generating a new workload key for the second particular workload;
and/or wherein determining the workload key for the particular workload comprises determining that the respective workload characteristics of the at least one other workload associated with the workload key satisfies the similarity threshold with the respective workload characteristics of the particular workload.

7. The computer-implemented method of one of claims 1 to 6, wherein:
the workload key is associated with at least one other workload of the plurality of workloads; and
the respective workload characteristics of each workload of the at least one other workload satisfies a similarity threshold with the respective workload characteristics of the particular workload.

8. A system comprising:
data processing hardware; and
memory hardware in communication with the data processing hardware, the memory hardware storing instructions that when executed on the data processing hardware cause the data processing hardware to perform operations comprising:
receiving a request to execute a particular workload of a plurality of workloads at a distributed computing system comprising a plurality of clusters, each workload of the plurality of workloads comprising respective workload characteristics;
determining a workload key for the particular workload based on the respective workload characteristics of the particular workload;
based on determining the workload key, obtaining a workload history comprising records of the at least one other workload associated with the workload key;
for each respective cluster of the plurality of clusters, determining a corresponding score associated with executing the particular workload at the respective cluster based on the workload history; and
executing the particular workload at one of the plurality of clusters based on the corresponding score of each respective cluster of the plurality of clusters.

9. The system of claim 8,
wherein the respective workload characteristics of the particular workload characterize interactions between the particular workload and the distributed computing system; and/or
wherein the respective workload characteristics comprise at least one of:
a workload name;
a username associated with the respective workload; or
source code of the respective workload.

10. The system of claim 7 or 8, wherein:
the distributed computing system further comprises one or more geographical regions each comprising at least one of the plurality of clusters; and
each cluster of the plurality of clusters is configured to execute the plurality of workloads.

11. The system of claim 10,
wherein the one of the plurality of clusters executing the particular workload is located in a same geographical region as a different one of the plurality of clusters executing the at least one other workload associated with the workload key; or
wherein the one of the plurality of clusters executing the particular workload is located in a different geographical region as a different one of the plurality of clusters executing the at least one other workload associated with the workload key.

12. The system of one of claims 7 to 11, wherein the operations further comprise obtaining a workload propagation policy defining a threshold amount of time required after generating the workload key before any workloads associated with the workload key are allowed to execute at any cluster of the plurality of clusters that none of the workloads associated with the workload key are currently executing at;
wherein determining the corresponding score associated with executing the particular workload at the respective cluster is, optionally, further based on the workload propagation policy.

13. The system of one of claims 7 to 12, wherein the operations further comprise determining a second workload key for a second particular workload by:
determining that none of the respective workload characteristics of the plurality of workloads satisfy a similarity threshold with the respective workload characteristics of the second particular workload; and
based on determining that none of the respective workload characteristics satisfy the similarity threshold with the respective workload characteristics of the second particular workload, generating a new workload key for the second particular workload; and/or
wherein determining the workload key for the particular workload comprises determining that the respective workload characteristics of the at least one other workload associated with the workload key satisfies the similarity threshold with the respective workload characteristics of the particular workload.

14. The system of one of claims 7 to 13, wherein:
the workload key is associated with at least one other workload of the plurality of workloads; and
the respective workload characteristics of each workload of the at least one other workload satisfies a similarity threshold with the respective workload characteristics of the particular workload.

15. A computer program comprising instructions which, when the program is executed by a computer processor, cause the computer processor to carry out the method of one of claims 1 to 7.
